Europäisches Patentamt

European Patent Office

Office européen des brevets

(19)

(11) Publication number: **0 353 918**

**A2**

## (12) EUROPEAN PATENT APPLICATION

(21) Application number: **89307451.8**

(22) Date of filing: **21.07.89**

(51) Int. Cl.⁴: **H02K 23/26**

(30) Priority: **01.08.88 JP 190604/88**

(43) Date of publication of application:
**07.02.90 Bulletin 90/06**

(84) Designated Contracting States:
**BE DE ES FR GB IT SE**

(71) Applicant: **Taga, Yasuo**
**21-7, Kasuga-cho**
**Noda-shi Chiba-ken(JP)**

(72) Inventor: **Taga, Yasuo**
**21-7, Kasuga-cho**
**Noda-shi Chiba-ken(JP)**

(74) Representative: **Muir, Ian R. et al**
**HASELTINE LAKE & CO. Hazlitt House 28**
**Southampton Buildings Chancery Lane**
**London WC2A 1AT(GB)**

(54) **Commutator rotary-device and method of forming the armature winding of the device.**

(57) Commutator windings are provided for the commutators of a commutator rotary-device, respectively. Each commutator winding is connected, at one end, to the corresponding commutator (31), and at the other end, to the next commutator (32). The winding is formed of a wire wound a number of times, around the armature of the motor. The wire is guided through a pair of slots (21, 22) of the armature which are opposed to each other, such that the number of the portions of the wire which pass on one side of the armature shaft is equal to, or one greater than, that of the portions which pass on the other side of the armature shaft (3).

F I G. 2 D

EP 0 353 918 A2

**Commutator rotary-device and method of forming the armature winding of the device**

The present invention relates to an improved commutator rotary-device, such as a commutator motor or a commutator generator, and also to an improved method of forming the armature winding of the commutator rotary-device.

In a conventional method of forming the armature winding of a commutator rotary-device (e.g., a commutator motor or a commutators generator), each turn of the winding is guided from one slot to another slot, passing only either the left side or the right side of the shaft of the rotor.

It is demanded that commutator rotary-devices have a higher efficiency (i.e., the ratio of the output to the input). To increase the efficiency of these devices, commutation should be efficiently achieved in the devices. The conventional devices, which have an armature winding made by the conventional method, cannot perform commutation so efficiently as is desired. Further, in the commutator rotary-devices, commutation cannot be achieved when the output voltage or rotational speed of the rotary device is relatively high. Consequently, the prior art commutators rotary-devices can hardly be used as a high-voltage AC commutator motor or a high-voltage universal motor.

The object of the present invention is to provide a commutator rotary-device which has high efficiency, and also a method of forming an armature winding which helps to provide a commutator rotary-device having high efficiency.

To attain the object, there is provided a commutator rotary-device wherein each commutator has one armature winding. The armature winding is connected, at one end, to the commutator, and at the other end, to the next commutator. The winding is made of a wire wound around the armature a number of times, passing through a pair of slots such that the number of the portions of the wire which pass on one side (either the left or the right) of the rotor shaft from one slot to the other slot is equal to, or one greater than, that of the portions which pass on the other side of the rotor shaft from said one slot to the other slot.

Also, to attain the object, there is provided a method of forming an armature winding, a wire is wound around an armature a number of times, passing through a pair of slots such that the number of the portions of the wire which pass on one side (right or left) of the rotor shaft from one slot to the other slot is equal to, or one greater than, that of the portions which pass on the other side (left or right) of the amarture shaft from said one slot to the other slot.

Due to the armature winding of the specific structure described above, the commutator rotary-device according to the present invention has high efficiency, and can be used as a high-voltage AC commutator motor or a high-voltage universal motor.

This invention can be more fully understood from the following detailed description when taken in conjunction with the accompanying drawings, in which:

Fig. 1 is a diagram schematically illustrating a motor according to the present invention;

Figs. 2A to 2D are diagrams showing the armature windings of the motor shown in Fig. 1; and

Fig. 3 is a graph representing the characteristics of the motor shown in Figs. 2A to 2D and those of a conventional motor.

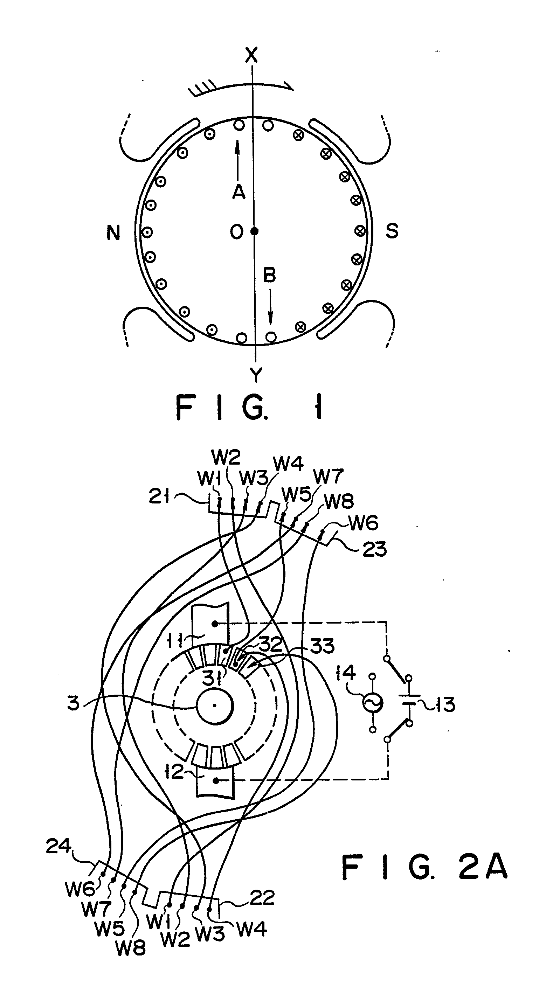

A method of forming the armature windings of a commutator motor according to the present invention will be described with reference to Fig. 1.

As is illustrated in Fig. 1, the motor has an armature and two poles N and S. The amarture has twenty-two slots. A wire is wound around the armature at pitch of 11. The wire is wound such that it passes on one side of the rotor shaft O, in the same direction and substantially the same number of times, as it passes on the other side of the O rotor shaft O.

With reference to Figs. 2A to 2D, it will be explained how to form the armature winding of a universal motor. Fig. 2A is a front view of the armature 1 of the motor, showing two brushes 11 and 12, four slots 21 to 24, and commutators 31 and 32. The slots 21 and 22, forming the first pair, are symmetrically located with respect to the shaft 3 of the rotor. Similarly, the slots 23 and 24, forming the second pair, are symmetrically located with respect to the shaft 3. The brushes 11 and 12 are connected to a DC power source 13 or an AC power supply source 14.

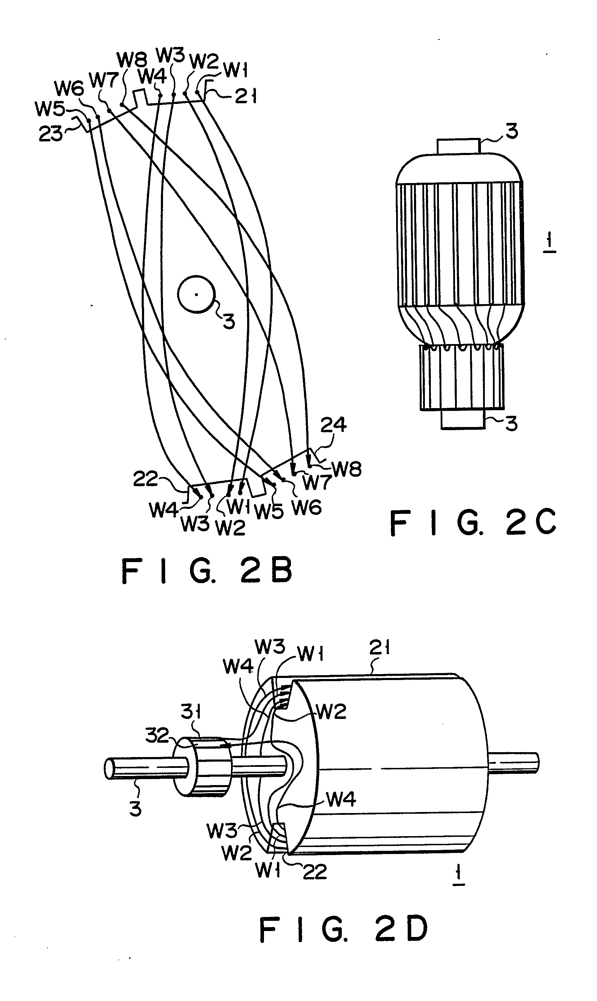

Fig. 2B is a rear view of the armature 1, and Fig. 2C is a side view of the rotor of the universal motor. Fig. 2D is a perspective view of the armature 1. In Fig. 2D, only two slots 21 and 22, and part of the armature winding are illustrated for the sake of simplicity. The two poles (not shown in Figs. 2A to 2D) are arranged as is illustrated in Fig. 1.

The method of forming the armature winding will now be described in detail. In this embodiment, a wire is guided eight times through each slot.

The first wire W1 is connected to the commutator 31, which is one of the commutators short-circuited to the brush 11. The first wire W1 is guided via the slot 21, as can be understood from Figs. 2A and 2D. It is further guided via the slot 21 to the slot 22, passing on the right of the shaft 3 of the rotor, as shown in Fig. 2B, and is then guided through the slot 22 to the slot 21, passing on the right side of the shaft 3, as is evident from Figs. 2A and 2D.

The second wire W2 is guided through the slot 21 to the slot 22, passing on the right side of the shaft 3, as shown in Fig. 2B. It is further guided via the slot 22 to slot 21, passing on the left side of shaft 3 as shown in Figs. 2A and 2D. The third wire W3 is guided through the slot 21 to the slot 22, passing on the left side of rotor shaft 3, as is evident from Figs. 2B. It is further guided via the slot 22 to the slot 21, passing the left side of the shaft 3, as is illustrated in Figs. 2A and 2D. The fourth wire W4 is guided through the slot 21 to the slot 22, passing on the left side of shaft 3, as is evident from Figs. 2B. As shown in Figs. 2A and 2D, the wire W4 is guided through the slot 22, passes the right side of the shaft 3, and is connected to the commutator 32 next to the commutators 31.

The fifth wire W5 is guided from the commutator 32 through the slot 23, as is shown in Fig. 2A. It is further guided via the slot 23 to the slot 24, passing on the right side of the rotor shaft 3, as is evident from Fig. 2B, and is then guided through the slot 24 to the slot 23, passing on the right side of the shaft 3, as can be understood from Fig. 2A. The sixth wire W6 is guided via the slot 23 to slot 24, passing on the right side of rotor shaft 3, as is shown in Fig. 2B, and is further guided via the slot 24 to the slot 23, passing on the left side of the shaft 3, as is evident from Fig. 2A. The seventh wire W7 is guided through the slot 23 to slot 24, passing on the right side of rotor shaft 3, as is shown in Fig. 2B, and is also guided through the slot 24 to the slot 23, passing on the left side of the shaft 3, as is evident from Fig. 2A. The eighth wire W8 is guided via the slot 23 to slot 24, passing on the left side of shaft 3, as is shown in Fig. 2B, and is further guided through the slot 24, passes on the right side of the rotor shaft 3, and is connected to the commutator 33 next to the commutators 32, as is illustrated in Fig. 2A.

Similar armature windings are formed and connected to all other commutators of the universal motor. Therefore, the wires of two windings pass each four times through each slot of the armature 1, whereby eight conductors pass via each slot. As a result, the rotor shown in Fig. 2C is made.

As may be understood from the above, the wire of each armature winding passes through a pair of slots such that the number of the portions of the wire which pass on one side of the rotor shaft is equal to, or one greater than, that of the portions which pass on the other side of the rotor shaft. Which side of the rotor shaft 3 is the left one or the right one depends on the direction from which the motor is viewed, and also on the angle of rotation of the rotor. Nonetheless, the present invention will be easily understood if the directions in which the portions of the wire extend are taken into consideration. As is clearly shown in Fig. 2A, of the conductors which extend from the slot 22 to slot 21, two (W2 and W3) pass on the left side of the rotor shaft 3, whereas one conductor (W1) passes on the right side thereof. Hence, one more wires pass on the left side of the shaft 3 than on the right side. On the other hand, as is shown in Fig. 2B, of the conductors which extend from the slot 21 to the slot 22, two pass on the right side of the rotor shaft 3 and also on the left side of the shaft 3. In this case, the same number of conductors pass on either side of the rotor shaft 3.

According to the present invention, for example, six conductors can be guided through each slot. In this case, the wires of two windings pass each three times through each slot of the armature 1. The same number of conductors are guided from the slot 22 to the slot 21 on the front of the armature 3, passing on either side of the rotor shaft 3. One more or one less conductors are guided from the slot 22 to the slot 21 on the rear of the armature, on one side of the rotor shaft 3, than on the other side thereof.

When an AC voltage or a DC voltage is applied across the brushes, an electrical current flowing through the conductors guided via each slot is exactly the same as in the conventional armature windings. Further, the armature windings are connected to the commutators in the same way as in the conventional motor. Therefore, the rotor of the universal motor rotates.

The armature windings of the embodiment described above help to achieve commutation efficiently. Hence, the motor requires no auxiliary poles, nor is it necessary to incline the commutation axis to the neutral axis. As a result, the universal motor has high efficiency.

Experiment

To determine the characteristics of the motor according to the present invention, the inventor has conducted the following experiment:

Two conventional motors were made, each of which had a 22-slot armature and armature windings each formed of a wire having a diameter of 0.45 mm. The wire is wound around the armature such that 24

3

conductors are guided through each slot. The commutation axis of the first conventional motor was aligned with the neutral axis, whereas that of the second conventional motor was inclined in the inverse direction of rotation of the rotor. A motor according to the invention was made, which also had a 22-slot armature and armature windings each formed of a wire having a diameter of 0.45 mm and wound around the armature such that 24 conductors are guided via each slot. The motor according to the invention had a commutation axis aligned with the neutral axis. The same fan was connected to the three motors as the load. Then, the motors were driven under the same condition.

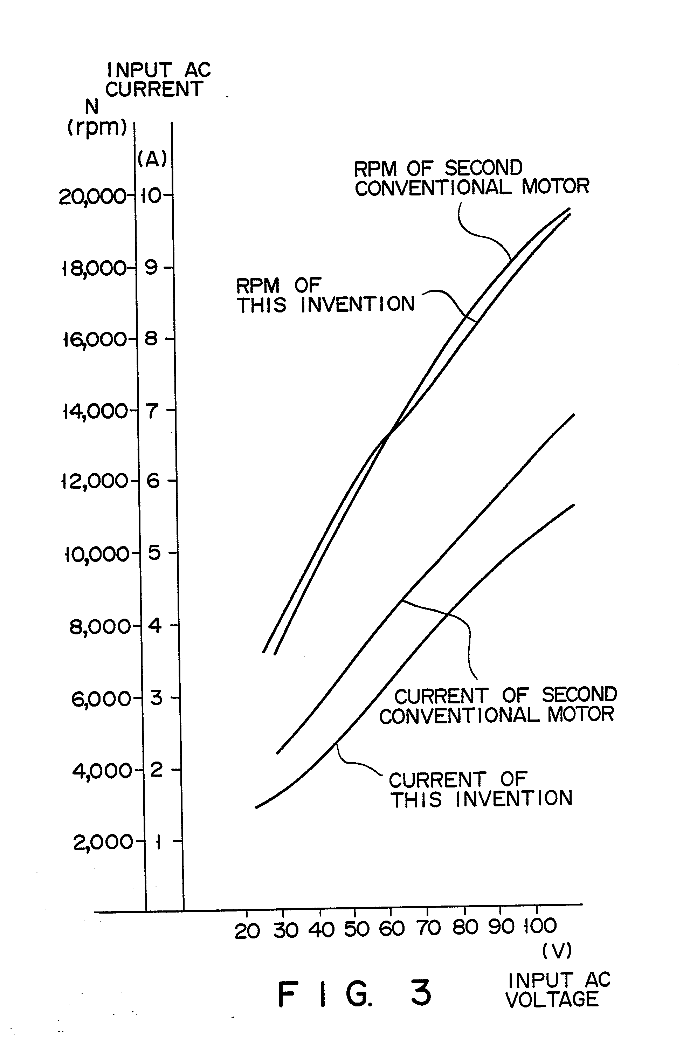

During the experiment it was observed that intense sparks were generated at the brushes of the first conventional motor wherein the commutation axis is aligned with the neutral axis, whereas no sparks were generated in the second conventional motor or the motor according to the present invention. No data showing the characteristics of the first motor could be obtained. The results of the experiment, in connection with the second conventional motor and the motor of the invention were as is shown in Fig. 3.

As is evident from Fig. 3, the motor according to the present invention had higher efficiency than the second conventional motor. In other words, the motor according to the invention was advantageous over the conventional motor in terms of efficiency.

The commutator windings made by the method according to the invention help to perform commutation with high efficiency. Hence, if these windings are incorporated into a motor, the motor will require no auxiliary poles' nor its commutation axis needs to be inclined to the neutral axis. Therefore, these commutator windings can be used to manufacture a high-voltage AC motor.

The inventor made a high-voltage AC motor having the commutator windings according to the invention, drove this motor at various voltages and currents, and measured the speeds of rotation of the motor being thus driven. The results were as is shown in the following table:

Table 1

| 240 V | 0.52 A | 10950 rpm |
|-------|--------|-----------|
| 260 V | 0.55 A | 11750 rpm |
| 280 V | 0.58 A | 12100 rpm |
| 300 V | 0.60 A | 12700 rpm |
| 320 V | 0.64 A | 13300 rpm |
| 340 V | 0.68 A | 13900 rpm |
| 360 V | 0.73 A | 14500 rpm |
| 380 V | 0.77 A | 15100 rpm |
| 400 V | 0.81 A | 15600 rpm |
| 420 V | 0.85 A | 16100 rpm |
| 440 V | 0.90 A | 16700 rpm |

The present invention is not limited to the embodiment described above. For instance, the armature is not limited to a 22-slot armature having wires wound it at pitch of 11. The invention can apply to, for example, a 20-slot or 24-slot armature with wires wound round it at pitch of 9 or 10. It should be noted, however, that the invention is advantageous particularly when it is applied to a device having two-poles, an armature with a wire wound around it and guided through two slots opposite to each other.

It does not matter in which order the portions of the wire are passed on the left and right sides of the rotor shaft. The only requirement is that the number of the portions of the wire pass on one side of the rotor shaft is equal to, or one greater than, that of the portions which pass on the other side of the rotor shaft.

According to the invention, the windings for the commutators can be formed of a single wire, or formed of a plurality of wires, respectively. As is shown in Fig. 2A, either brush is twice broader than the commutators, thereby suppressing the generation of sparks.

The embodiment described above is a universal motor. Nonetheless, the invention can be applied to a DC motor, a monophase AC motor, and the like.

Moreover, the present invention can apply also to a commutator generator.

4

As has been described, the commutator windings made by the method according to the invention help to perform commutation with high efficiency. Hence, if these windings are incorporated into a motor, the motor will have high efficiency, without requiring auxiliary poles, or a commutation axis inclined to the neutral axis. In addition, the use of the commutator windings makes it possible to manufacture a high-voltage AC motor.

## Claims

1. A commutator rotary-device comprising:
an armature (1) having a shaft, a plurality of slots, and a plurality of commutators;
a pair of brushes (11, 13) put in contact with said commutators;
a pair of poles (N, S); and
a plurality of windings (W1 to W8), each connected at one end to the corresponding commutator (31) and at the other end to the commutator (32) next to the corresponding commutator (31), and formed of a wire wound around said armature (1) a number of times, guided through a pair of slots (21, 22) such that the number of the portions of the wire which pass on one side of the shaft from one slot to the other slot is equal to or one greater than that of the portions of the wire which pass on the other side of the shaft from said one slot to the other slot.

2. A method of forming an armature, comprising the step of winding a wire around an armature a number of times, passing through a pair of slots, such that the number of the portions of the wire which pass on one side of the shaft of said amarture from one slot to the other slot is equal to, or one greater than, that of the portions which pass on the other side of the shaft of said amarture from said one slot to the other slot.

FIG. 1

FIG. 2A

F I G. 2 B

F I G. 2 C

F I G. 2 D

F I G. 3